(19) Europäisches Patentamt / European Patent Office / Office européen des brevets

(11) **EP 4 047 358 A1**

(12) **EUROPEAN PATENT APPLICATION**
published in accordance with Art. 153(4) EPC

(43) Date of publication:
**24.08.2022 Bulletin 2022/34**

(51) International Patent Classification (IPC):
***G01N 27/26*** (2006.01)

(21) Application number: **19949080.6**

(22) Date of filing: **27.11.2019**

(86) International application number:
**PCT/RU2019/000861**

(87) International publication number:
**WO 2021/076000 (22.04.2021 Gazette 2021/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.10.2019 RU 2019133190**

(71) Applicant: **Kuznetsov, Aleksander Evgenevich Moscow, Zelenograd 124683 (RU)**

(72) Inventors:
• **KUZNETSOV, Evgenii Vasilevich Moscow, 124683 (RU)**
• **KUZNETSOV, Aleksander Evgenevich Moscow, 124683 (RU)**

(74) Representative: **Chimini, Francesco Jacobacci & Partners S.p.A. Piazza della Vittoria 11 25122 Brescia (IT)**

(54) **SYSTEM AND METHOD FOR DYNAMICALLY MEASURING REDOX POTENTIAL DURING A CHEMICAL REACTION**

(57) The invention relates to systems and methods for measuring the dynamic changes in the chemical potential of electrons and the redox potential in a liquid during the course of a chemical reaction, which makes it possible to plot the energy change curve during a reaction. The system for dynamic measurement of the redox potential in an electrolyte with a limited volume for studying the ongoing chemical reactions therein includes at least one reference electrode and at least one indicator electrode immersed in the electrolyte and connected to an external circuit. The reference electrode is configured to freely exchange electrons with the electrolyte and has a low impedance relative to the indicator electrode impedance, the reference electrode being connected to a constant voltage source or a common ground potential, wherein an offset voltage is applied thereon from an external circuit. The indicator electrode has a high impedance relative to the reference electrode impedance, which prevents the electronic exchange with the electrolyte solution; the indicator electrode is connected to an external circuit for measuring the potential thereon. Moreover, the ratio between the measuring electrode impedance and the reference electrode impedance is at least 5; the distance between the reference electrode and the indicator electrodes does not exceed 1 cm, the electrolyte volume is not more than 10 cm$^3$, and the vessel limiting the electrolyte volume provides a high electrolyte/zero-ground-potential impedance relative the indicator electrode impedance, with the ratio equal or exceeding 5. A method for studying and researching the chemical processes in a liquid electrolyte comprising the following. The reference electrode is connected to a constant po-tential through a voltage source or the common ground potential. Using an external circuit, temporal electric po-tential changes on the indicator electrode are deter-mined. Based on the measurements obtained, the tem-poral redox potential changes in the electrolyte are ob-tained. Based on the obtained temporal redox potential change, it becomes possible to visualize and study tran-sition states during a chemical reaction using the chem-ical reaction energy changes dependence, and to obtain thermodynamic and kinetic constants and chemical re-action values from the temporal energy changes depend-ence.

EP 4 047 358 A1

reference electrode

indicator electrode

$\sim \mu_e$

$U$    $Z_{REF}$    $\sim \mu_e$    $Z_{IND}$    $V$

$Z_{PAR}$

**Fig. 1**

**Description**

**Field of the Invention**

The invention relates to systems and methods for measuring the dynamic changes in the chemical potential of electrons and the redox potential in a liquid during the course of a chemical reaction, which makes it possible to plot the energy change curve during a reaction.

**Background of the invention**

The study of chemical reactions affects all the modern branches of science. The study of chemical reactions and of the conditions affecting these reactions plays important role in the development of new effective catalysts for the synthesis and processing of new promising materials, of new methods for the synthesis of organic molecules and in the increase of the raw materials processing efficiency. The study of biological processes and associated biochemical reactions, from a fundamental point of view, allows lifting the veil of secrecy over the functioning of living organisms, and from a practical point of view - discovering new drugs and improving the existing medical diagnostics methods. For many industrial and research processes, the chemical reaction status can be evaluated based on the electric potential between an inert electrode and a reference electrode placed in a solution. This potential is commonly referred to as the solution's oxidation-reduction potential (OBP). In general, the measured potential reflects the change in the oxidation-reduction potential of the inert electrode, and the reference electrode provides a specific stable point relative to which the change in potential is measured.

Traditional electrode systems consist of a working electrode which is usually made of a noble metal, and of a reference electrode which is most often a metal/salt - metal/solution system. The most common reference electrodes are silver-chloride, hydrogen and calomel ones. The main disadvantages of these electrochemical sensors are the relatively long periods of establishing the equilibrium in a system required to perform a measurement, the relatively high volumes of the analyzed liquid, and the occurrence of noises in the electrochemical cell circuit. All this significantly affects the sensitivity, cost and accuracy of measurements. Parasitic currents can occur due to metal corrosion, short circuits in the electrical circuits or environmental influences. Thus, in addition to the need to use several electrodes, traditional electrode systems require the development of specialized compensation electrical circuits and, in general, are poorly adaptable for microvolume measurements.

In addition to the classical electrode systems for determining the redox potential, semiconductor and optical sensors also exist. The photosensitive semiconductor sensors are based on detecting the color changes in the coloring agents that change their color upon oxidation. The process of detection by semiconductor sensors is based on the use of special mediator molecules. Compared to traditional devices, semiconductor sensors have a number of distinctive advantages. First of all, such sensors can record very low signals due to modulation and background noise reduction. In addition, semiconductor sensors have tremendous miniaturization potential which makes it possible to create portable devices based on them.

The modern optical and semiconductor sensors for determining the redox potential are based on the use of additional reagents, which adds at least one additional chemical reaction to the detection circuit. In addition to the added cost, the appearance of additional noises and an increase in measurement errors, the speed of the system's response to the rapid fluctuations of potential provided by these circuits is strongly limited, which makes impossible to use them for measuring the dynamic changes in potential over time, the said changes being caused, e.g., by the formation of an intermediate connection in the process of a chemical reaction.

The ISFET and ChemFET (US 4,020,830) structures have become widespread as solid-state sensors for determining the pH value of a solution and the concentration of compounds. These sensors are used in industry for the operating procedures monitoring, in the food industry and in the environmental monitoring. However, as of yet no data exists in the literature indicating the use of ISFET or ChemFET as tools for measuring the dynamic changes in the chemical' or redox potential of electrons during chemical reactions.

In light of the above, it is desirable to create a device for detecting a «burst of energy change during a reaction», which ultimately could be used to study the kinetics and thermodynamics of chemical reactions. It is also desirable to create a device that, on the one hand, would have the miniaturization potential, and, on the other hand, would allow direct detection of ultra-low and rapid changes in the oxidation-reduction potential occurring in the dynamic non-equilibrium systems, e.g., during a chemical reaction.

**Summary of the Invention**

The technical problem to be solved by the invention being developed, and the technical result of the present invention is to create a two-electrode system using which it would be possible to detect intermediate transient states and monitor energy changes during the course of a chemical reaction.

An additional technical problem is the creation of a method utilizing the developed two-electrode system for studying dynamic processes in electrolytes, e.g., for studying the ongoing chemical processes in a liquid.

The technical problem is solved as follows.

The system for dynamic measurement of the redox potential in an electrolyte with a limited volume for studying the ongoing chemical reactions therein includes at least one reference electrode and at least one indicator electrode immersed in the electrolyte and connected to an external circuit. The reference electrode is configured to freely exchange electrons with the electrolyte and has a low impedance relative to the indicator electrode impedance, the reference electrode being connected to a constant voltage source or a common ground potential, wherein an offset voltage is applied thereon from an external circuit. The indicator electrode has a high impedance relative to the reference electrode impedance, which prevents the electronic exchange with the electrolyte solution; the indicator electrode is connected to an external circuit for measuring the potential thereon. Moreover, the ratio between the measuring electrode impedance and the reference electrode impedance is at least 5; the distance between the reference electrode and the indicator electrodes does not exceed 1 cm, the electrolyte volume is not more than 10 cm$^3$, and the vessel limiting the electrolyte volume provides a high electrolyte/zero-ground-potential impedance relative the indicator electrode impedance, with the ratio equal or exceeding 5.

Additionally, the impedance of the reference electrode is between 5 $\Omega$ and 500 k$\Omega$.

Additionally, the impedance of the indicator electrode is 5 k$\Omega$ or more.

Additionally, the electrolyte/zero-ground-potential impedance is 50 k$\Omega$ or more.

In one embodiment of the invention, an ion-sensitive field-effect transistor is used as the indicator electrode, wherein a liquid electrolyte solution is used as the liquid gate and a large area metal electrode is used as the reference electrode, the area of the metal electrode exceeding the gate area of the ion-sensitive field-effect transistor by more than 100 times.

Additionally, a dielectric is used as the gate dielectric material of the ion-sensitive field-effect transistor contacting the electrolyte solution, the said dielectric being selected from the following dielectric materials: $Ta_2O_5$, $Si_3N_4$, ZrO, $HfO_2$, $SiO_2$, $Al_2O_3$, or their compositions.

Additionally, the dielectric of the ion-sensitive field-effect transistor can be further coated with a layer of one of the following noble metals: Ag, Au, Pd, Pt, Ru, Rh, Ir, Os or a composition or an alloy based thereon.

Additionally, the ion-sensitive field-effect transistor can be both in before-threshold and inversed mode during the measurements.

Additionally, the proposed system further includes a means of obtaining data for the purpose of studying and researching the chemical processes based on the temporal electrons redox potential changes in an electrolyte solution.

Additionally, the means of obtaining data for the purpose of studying and researching the chemical processes is configured to plot the energy changes curve during a chemical reaction.

Additionally, the means of obtaining data for the purpose of studying and researching the chemical processes is configured to visualize and study the transient states during a chemical reaction, based on the chemical reaction energy changes curve.

Additionally, the means of obtaining data for the purpose of studying and researching the chemical processes is configured to obtain the thermodynamic and kinetic constants and values of a chemical reaction based on the chemical reaction energy changes.

The technical problem is also solved by creating a method for studying and researching the chemical processes in a liquid electrolyte solution during a chemical reaction, comprising the following stages:

(a) providing the system described above,

(b) connecting the reference electrode to a constant potential through a voltage source or the common ground potential,

(c) determining the electrons redox potential change in a liquid solution, comprising the following:

(i) determining the electrical potential change over time at the indicator electrode using an external circuit,

(ii) obtaining, based on the changes measured in step (i), the temporal redox potential changes curve in the electrolyte,

(d) obtaining data for the purpose of studying and researching the chemical processes based on the temporal redox potential changes.

**Brief description of the drawings**

The accompanying drawings which are incorporated to and form part of the present description illustrate the embodiments of the invention and together with the above general description of the invention and the following detailed description of the embodiments explain the principles of the present invention. In the drawings, like numbers refer to like parts or structural elements.

Fig. 1 shows a measuring system for measuring the dynamic electron chemical potential changes in an electrolyte, and its equivalent electrical circuit.

Fig. 2 shows the energy diagram for the electrode-solution-dielectric-semiconductor system which is a particular case of a two-electrode system with an electrode-semiconductor displacement in a stationary equilibrium state. For simplicity, the metal electrode and the semiconductor contact are made of the same material.

Fig. 3 shows a schematic representation of the ISFET structure which functionally combines the measuring electrode and the «electrode voltage - drain current» transducer.

Fig. 4 shows the electron chemical potential (redox potential) change in the course of a chemical reaction and its detection by the ISFET transistor.

Fig. 5 schematically shows an ISFET structure implemented on a SOI substrate, with an *E. coli* nitroreductase immobilized on the gate dielectric surface.

Fig. 6 shows the volt-ampere characteristics of an ISFET structure implemented on a SOI substrate.

Fig. 7 shows the time curve of the electron chemical potential changes caused by the *E. coli* nitroreductase enzyme catalytic activity, with different sequences of the TNT and enzyme additions in 50 mM $Na_2HPO_4$, at pH 7.1: A) 5 mM NADPH, $5 \cdot 10^{-7}$M TNT, $1 \cdot 10^{-8}$ M *E. coli* nitroreductase, B) 5 mM NADPH, $1 \cdot 10^{-8}$ M *E. coli* nitroreductase, $1 \cdot 10^{-6}$ M TNT.

Fig. 8 shows a typical dynamic redox potential change in a liquid gate caused by the *E. coli* nitroreductase reaction, with the detection of two intermediates, [E-P1]* and [E-P2]*.

Fig. 9 shows a semiconductor structure on bulk silicon used to detect an intermediate anion during the biocatalysis of carnitine acetyl-transferase from a pigeon's heart and shows a schematic representation of an intermediate complex in the enzyme's catalytic center.

Fig. 10 shows a typical volt-ampere characteristic of a semiconductor structure used in the detection of the intermediate complex in the catalytic center of the carnitine acetyl-transferase from the pigeon's heart.

Fig. 11 shows the time curve of the electron chemical potential changes (redox profile) in the gate for different concentrations of L-carnitine at a fixed coenzyme A concentration (0.18 $\mu$M) during biocatalysis involving the carnitine acetyl-transferase from the pigeon's heart.

Fig. 12 shows the SOI structure with a floating tantalum gate used to determine the Michaelis constants in horseradish peroxidase reactions with ABTS and TMB substrates.

Fig. 13 shows the volt-ampere characteristic of an ISFET structure with a floating tantalum gate, implemented on a SOI substrate.

Fig. 14A shows the response of the semiconductor structure to the horseradish peroxidase ($10^{-11}$ M) reaction with different concentrations of TMB upon the reaction initiation by introducing 500 $\mu$M hydrogen peroxide.

Fig. 14B shows the kinetic constant calculation for the reaction with TMB.

Fig. 15 shows a dynamic change in the redox profile during biocatalysis involving the enolase enzyme from S. *cerevisiae* baker's yeast in two repetitions (1 and 2) and the control in the absence of the enzyme (3).

Fig. 16 shows a dynamic redox profile change during biocatalysis involving the triosophosphate isomerase enzyme from S. *cerevisiae* baker's yeast at different GAP substrate concentrations.

Fig. 17 shows the dynamic redox profile change in the gate of the semiconductor structure described in example 3, during the DNA ligation reaction catalyzed by T4 DNA ligase (EC. 6.5.1.1). The reaction was activated by the addition of ATP; profile (1) corresponds to the reaction in the presence of the T4 ligase enzyme; profile (2) corresponds to the reaction without the enzyme

Fig. 18 shows a dynamic redox profile change in the gate of the semiconductor structure described in example 3, during the solvolysis reaction of benzoyl chloride in different concentrations contained in a 20% water and 80% acetone solution

Fig. 19 shows a redox profile dynamic change in the gate of the semiconductor structure described in example 3, during the solvolysis reaction of benzoyl chloride in the fixed concentration of $3*10^{-4}$ M with an increased water ratio in the water-acetone mixture Fig. 20 shows a variant of a semiconductor structure with a gold-plated gate dielectric.

Fig. 21 shows a dynamic redox profile change in the system:

(1) during the reaction of $1*10^{-8}$ M horseradish peroxidase with $5*10^{-5}$ M TMB upon introduction of $2*10^{-5}$ M $H_2O_2$ into the system, detected by the semiconductor structure with a gold-plated gate dielectric

(2) during the reaction of $1*10^{-8}$ M horseradish peroxidase with $5*10^{-5}$ M TMB upon introduction of $2*10^{-5}$ M $H_2O_2$ into the system, detected in an equivalent cell by two platinum electrodes placed at a distance of less than 2 mm apart

**Terms and Definitions**

Some of the terms used in this description are defined below. Unless specified otherwise, the technical and scientific terms in this application have standard meanings generally accepted in the scientific and technical literature.

In the present description and in the claims, the «comprises», «includes», «including», «having», «equipped», «containing» terms and their other grammatical forms are not intended to be construed in an exclusive sense, but, on the contrary, are used in a non-exclusive sense (that is, in the sense of «having as an integral part of its composition»). Only the expressions like «consisting of» should be construed as a comprehensive list.

In this application, the «redox potential» and «electrons chemical potential» terms are the generally accepted ones. In a liquid, the «redox potential» concept is equivalent to a more general thermodynamic concept, namely, the «electrons chemical potential» which is determined by the redox pairs ratio in the system. Since the «redox potential» is usually expressed in units of the electric field voltage (in Volts) and the «electrons chemical potential» - in energy units, their proportionality factor is equal to the elementary electric charge multiplied by the number of electrons involved in the charge transfer processes per one redox pair. It is convenient to represent the «electrons chemical potential» in non-systemic units (eV); in this case, the numerical values of the «redox potential» and «electrons chemical potential» coincide up to a sign. The temporal change in the «electrons chemical potential» is equivalent to the used «reaction energy profile» or «redox profile» terms and reflects the dynamic change of the redox potential in the system.

In this application, the «impedance» term implies the generally accepted concept of a complex electrical resistance of a circuit or a circuit element, depending on the applied signal frequency, wherein the impedance magnitude signifies the modulus of the complex impedance value, and the impedance ratio - the ratio of the complex impedance values moduli in the entire frequency range.

In this application, the «ion-selective field-effect transistor» (ISFET), «ISFET structures» and «ISFET micro structures» terms are synonymous. In such transistors, the metal transistor gate is replaced with a liquid that is contacted by the reference electrode, and the liquid-dielectric phase interface constitutes a chemically sensitive layer. The interaction of the determined component with the chemically sensitive layer causes a change in the electric field in the gate region and, therefore, in the threshold potential and current in the transistor, which gives rise to the analytical signal.

In general, in this application, a «sensor» or a «sensor device» or an «analyte detection and identification device» refers to a device transforming the information on the presence of a specific chemical compound (analyte) into a convenient (detectable) signal for conversion. «Biosensors» are a type of sensors in which the recognition system is biochemical in nature and is based on a reaction involving biomolecules or supramolecular biological structures.

The «microsystem», «integrated circuit», «integrated microcircuit», «chip», «electronic chip» terms are synonymous and represent a microelectronic device - an electronic circuit of arbitrary complexity (a crystal), arranged on a semiconductor substrate (a plate or a film) and placed in anundismountable case or having no such case, if included in the microassembly. Often, an integrated circuit (hereinafter referred to as IC) is understood as a crystal or a film with an electronic circuit as such, and a microsystem (hereinafter referred to as MS) - as an IC enclosed in a package.

The «SOI substrate» (silicon-on-insulator substrate) term signifies a three-layer substrate of the silicon-dielectric-silicon structure. Semiconductor devices manufacturing technology based on the use of SOI substrates instead of bulk silicon substrates allows improving some performance characteristics of semiconductor devices and reducing leakage currents and noises.

In electrochemistry, an electrode is a system wherein a conductive substance is placed in a solution or molten electrolyte mass.

Solid metal (in the form of a piece, plate, wire, powder or single crystal), liquid metal (mercury, molten metals, amalgams (the mercury alloys)), non-metallic materials (carbon, graphite, etc.) and various compounds (oxides, carbides, etc.) can all be used as a current-conducting material. Electrons act as the charge carriers in the electrodes, and ions - in the electrolyte.

An electrolyte contains charged particles, specifically, cations and anions; most often the electrolyte is an aqueous solution of salt, but molten salts are also electrolytes.

Additionally, the «first», «second», «third», etc. terms are used simply as conditional markers, without imposing any numerical or other restrictions on the enumerated objects.

The «connected» term means functionally connected, and any number of intermediate elements placed between the connected components (including the absence of intermediate elements) or a combination thereof can be used.

**Detailed description of the invention**

The present application is aimed at creating a two-electrode system for measuring the dynamic changes and redox potential of a liquid during an ongoing chemical reaction and a method of using such a system with a purpose of studying and researching the chemical processes in a liquid electrolyte solution during an ongoing chemical reaction.

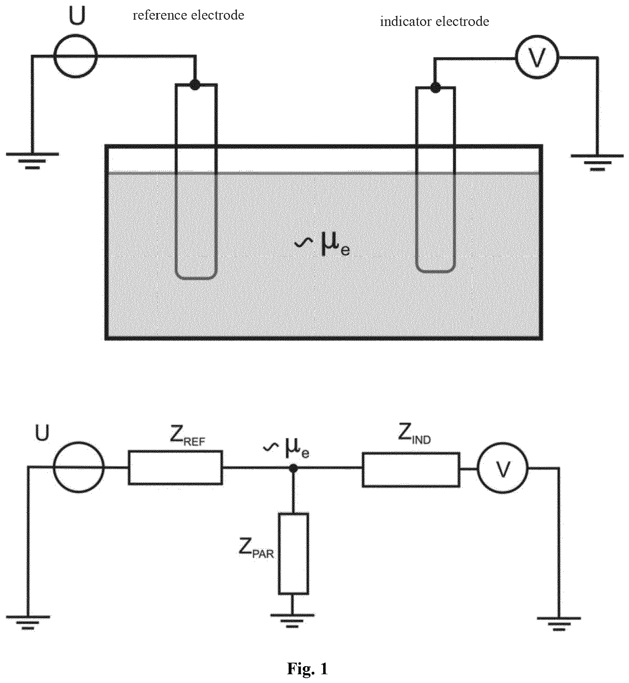

The claimed system is shown in Fig. 1. A reference electrode and an indicator electrode connected to an external circuit are immersed at a distance of no more than 1 cm from each other in an electrolyte with a limited volume of no more than 10 cm³, to study the chemical reactions occurring in the electrolyte.

The volume value has been selected to correspond to the condition when a dynamic redox potential change in the system starts to significantly contribute to the equilibrium change. As this takes place, in a larger volume and at a greater distance between the electrodes, the contribution of the redox potential dynamic change to the redox potential change in the system diminishes to such an extent that this effect becomes invisible and only a signal is observed measured based on the redox potential end point. Moreover, from a practical point of view it is important that to perform the considered measurements, relatively high reagent concentrations are needed. For the practical use, e.g., when studying enzymes, the required concentrations in the indicated volume are achieved by adding significant amounts of reagents. Additionally, in large volumes the process of diffusion starts making a significant contribution which causes the deterioration in the measured signal temporal resolution. From a practical point of view, it is worth noting that it is commercially impractical to use volumes exceeding the declared volume for the described measurements, which is due to the high reagent consumption.

The reference electrode is connected to a constant voltage source or to a common ground potential. An offset voltage is applied to the reference electrode from the external circuit Eref, and the indicator electrode is connected to an external circuit to measure the potential E thereon.

The reference electrode is configured to freely exchange electrons with the electrolyte (is electron-reversible) and has low impedance relative the indicator electrode impedance. For example, the impedance value of the reference electrode can vary from 5 $\Omega$ to 500 k$\Omega$. In addition, it is important to note that this electrode's impedance directly determines the speed of the entire system operation and its temporal response to the processes occurring in the electrolyte.

The indicator electrode has high impedance relative the reference electrode impedance, which prevents the electronic exchange with the electrolyte solution. For example, the impedance value of the indicator electrode can vary from 5 $\Omega$ to an unlimited value.

Moreover, the electrodes are selected in such a way that the ratio of the measuring electrode impedance to the reference electrode impedance would be at least 5.

The vessel limiting the electrolyte volume provides a high electrolyte/zero-ground-potential impedance relative the indicator electrode impedance, with the ratio equaling or exceeding 5. The electrolyte/zero-ground-potential impedance is 50 k$\Omega$ or more. In the process, the electrolyte volume, the vessel shape and the distances between the electrodes all directly affect the said impedances; therefore, they are specifically selected and taken into account in the general impedance ratio. For example, as the distance between the electrodes increases, their impedances increase due to an increase of the component associated with the diffuse transfer of ions involved in the process; in addition, the impedance ratio can be changed by adjusting one electrode immersion level in the electrolyte relative the other.

In such a system, with dynamic changes in the electrolyte associated with the electron free energy changes, an electromotive force (EMF) will arise causing a non-equilibrium electronic electrolyte-electrode exchange which will continue until it is compensated by an electric potential change within the electrolyte. The potential delay time relative the electrons energy changes will be determined by the rate of the electrolyte electrons exchange with the electrodes and the external environment or by the impedances of the measuring and reference electrodes, as well as by the electrolyte/zero-ground-potential impedance.

If the dynamic process in the electrolyte is described by some characteristic time values and these time values are much smaller than the potential delay time, then the potential changes reflect electron energy changes within the system under study. With the indicated indicator electrode and reference electrode impedance ratios in the system, the measuring electrode and the external environment will have a minimal effect on the said potential, and the latter can be read by the measuring electrode.

Since the measured potential is, by definition, the redox potential, the redox potential changes registered on the measuring electrode during the dynamic processes occurring in the electrolyte in such a system will be, in fact, the electrolyte redox potential changes.

The described effect can be used to study dynamic processes in an electrolyte, e.g., to study the ongoing chemical processes in a liquid. As this takes place, the lower the reference electrode impedance, the shorter the redox potential relaxation times and the better time resolution can be achieved during the dynamic process observation. The examples show how this effect can be used to study enzymatic reactions or to study the nucleophilic substitution mechanism changes.

A particular case of the two-electrode system is a system in which the ISFET microstructure acts as a measuring electrode and a platinum group metal electrode of a sufficiently large area is present which acts as a reference electrode. The change in potential at the measuring electrode, which is the surface of an ISFET structure, can be determined by the change in the transistor drain current. The area of such a measuring electrode produced using integral technology techniques can be less than a square micrometer and, accordingly, be characterized by a very low input capacitance (high reactance), while the gate dielectric provides electrical isolation and has a very high input resistance (in excess of

$10^{12}\,\Omega$ with the gate size of $100\times100\ \mu m^2$). Therefore, the ISFET structure is ideally suited as a measuring microelectrode for the system under consideration.

In a specific embodiment, the gate area of the ISFET microstructure manufactured using micromachining techniques had a very small area ($100*100\ \mu m^2$), and the reference electrode in the form of a platinum needle had an area more than thousands times larger than the ISFET microstructure gate area, as well as a small electrical resistance of the interface and high electrical capacitance of the double diffusion layer, which ensured low reactance. The distance between the electrodes amounted to several millimeters which excluded the effect of impedance associated with diffusion transfer mechanisms when measuring the studied chemical systems. The limiting vessel formed on the semiconductor IC surface in the form of a polymer well has been isolated from it by about 1 $\mu m$ thick $SiO_2$ dielectric layer resting on a silicon surface with a low concentration of carriers, which provided for high electrolyte-substrate impedance. This system made it possible to measure the reaction's dynamic redox potential change with a characteristic time of several seconds and up. In so doing, the temporal resolution was limited by the measuring equipment capabilities.

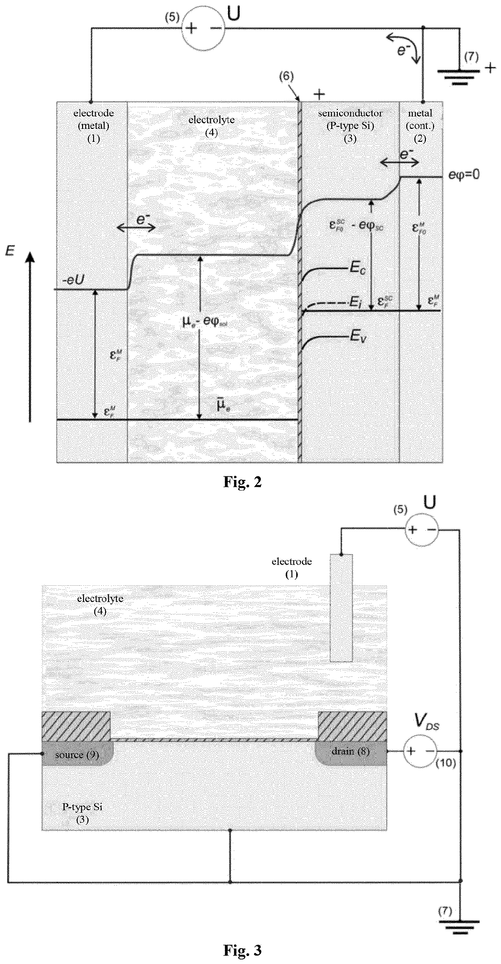

To substantiate the claimed functioning of the two-electrode system, let's consider the energy diagram in the «electrode-solution/dielectric-semiconductor» system when the electrode-semiconductor offset is applied in a stationary state shown in Fig. 2.

The electrode (1) and the contact (2) to the semiconductor (3) are made of the same material (characterized by the same Fermi level). An inert metal reference electrode (1) is immersed in the electrolyte (4). The electrode (1) exchanges electrons with the electrolyte (4), and the exchange is reversible. The electrode (1) is connected through a voltage source (5) to the semiconductor (3) which is also immersed in the electrolyte (4), but is isolated from it by a thin dielectric layer (6). We assume that the dielectric (6) is ideal, i.e., has infinite resistance, and there is no electric current across the «electrolyte-semiconductor» interface (Faraday current). The semiconductor (3) is connected to the reference potential (7) through the contact (2).

In a stationary state at a given voltage U at the source, the following electrochemical potential equalities hold true:

$$\overline{\mu}_e^{sol} = \varepsilon_F^{ME}.$$

$$\varepsilon_F^{MC} = \varepsilon_F^{S}. \tag{1}$$

Where $\overline{\mu}_e^{sol}$ is the solution electrons' electrochemical potential, $\varepsilon_F^{ME}$ is the reference electrode electrons' electrochemical potential (Fermi level), $\varepsilon_F^{MC}$ is the contact metal electrons' electrochemical potential (Fermi level) and $\varepsilon_F^{S}$ is the semiconductor Fermi level.

The equilibrium is achieved through the exchange of electrons and the redistribution of the electric charge within the system. The electrons are exchanged between the electrolyte (4) and the reference electrode (1) directly through the interface, but the exchange of electrons between the semiconductor (2) and the reference electrode (1) occurs through an external electrical circuit (through a voltage source with a low internal resistance). The exchange charge is concentrated at the phase interface; therefore, it is called the interface charge (in the case of a semiconductor, this is the depletion or accumulation inverse charge; for the electrolyte, this is the diffusion layer charge); it changes the internal electrostatic potential of each of the system phases. In addition to the interface charge, the internal potential also depends on the surface potential associated with the electric dipole moment on the surface of the phases. This dipole moment is formed due to the electron's wave function extending beyond the phase border (in the case of a metal or a semiconductor), or due to the dipole orientation of water molecules on the surface (in the case of a solution) (1. Trasatti S. The absolute electrode potential: an explanatory note (Recommendations 1986) //Pure and Applied Chemistry. - 1986. - T. 58. - No. 7. - P. 955-966. 2.Forstmann F. The Fermi level in electrolytes-about electrochemical potentials at electrolyte-electrode interfaces //AIP Conference Proceedings. -AIP, 2008. - V. 979. - No. 1. - P. 181-194.). At the «insulating dielectric - solution» border there may also be present an absorbed charge associated with the chemical interaction of the dielectric's surfaces both with solvent molecules and dissolved substances. For example, in the case of the «oxide-solution» interface this charge is explained through the site-binding model implying the interaction of the potential forming ions with the oxide surface groups on the surface (D. E. Yates, S. Livine and T. W. Healy, Site-binding model of the electrical double layer at the oxide/water interface, J. Chem. Sot., Farnduy Trans. I, 70 (1974) 1807-1818).

Thus, an interface potential difference arises between the contacting phases, which is equal to the difference between the internal phase potentials.

In the given equilibrium energy diagram (Fig. 2), the potentials associated with dipoles are not shown. These potentials do not depend on the change in the difference of interface potentials (Sato N. Electrochemistry at metal and semiconductor electrodes. - Elsevier, 1998) which are described here; therefore, for clarity of perception these potentials have been omitted. The adsorption charges on the surfaces of solid phases, as well as the surface state charges at the solid phase interfaces have also been assumed to be zero.

The expressions for the electrochemical potential in the reference electrode (1), electrolyte (4), semiconductor (3) and contact (2), respectively, will be written as follows:

$$\varepsilon_F^{ME} = \varepsilon_{F0}^M - eU \tag{2}$$

$$\overline{\mu}_e = \mu_e - e\varphi_{sol} \tag{3}$$

$$\varepsilon_F^S = \varepsilon_{F0}^S - e\varphi_{SC} \tag{4}$$

$$\varepsilon_F^{MC} = \varepsilon_{F0}^M \tag{5}$$

where $\varepsilon_{F0}^M$ is the Fermi level in a metal at zero potential, where $\varepsilon_{F0}^{sc}$ is the Fermi level in a semiconductor at zero potential, $\overline{\mu}_e$, $\mu_e$ - electrochemical and chemical potentials of electrons in a solution, $\varphi_{sol}$ - the potential within the volume of the solution, $\varphi_{SC}$ - the potential in a semiconductor, e - the elementary charge.

From (1) - (5) it follows:

$$\varphi_{sol} = -\frac{\varepsilon_{F0}^M - \mu_e}{e} + U \tag{6}$$

$$\varphi_{sc} = -\frac{\varepsilon_{F0}^M - \varepsilon_{F0}^{sc}}{e} \tag{7}$$

And the potential drop between the liquid and the semiconductor $V_G$ will be equal to:

$$V_G = \varphi_{sol} - \varphi_{sc} = -\frac{\varepsilon_{F0}^{sc} - \mu_e}{e} + U \tag{8}$$

This electrical voltage directly determines the semiconductor (3) surface conductivity. Moreover, from the last expression it follows that when the voltage U changes, the following holds true:

$$\Delta V_G = \Delta U \tag{9}$$

If, however, for some reason the chemical potential of electrons in the solution changes, then at the fixed voltage of U the following holds true:

$$\Delta V_G = \frac{\Delta \mu_e}{e} \tag{10}$$

Thus, the change in the chemical potential of electrons in the electrolyte (4) in the considered system is equivalent to the change in potential at the voltage source (5) multiplied by the elementary charge.

In a real life system, the dielectric (6) - electrolyte (4) boundary can carry an additional «adsorption» charge due to the electrolyte's interaction with the dielectric surface. For example, in the case of oxides, this surface adsorption charge is explained through the site-binding model. This model considers the interaction of the formed ions with the oxide surface groups (R. van Hal, J. Eijkel, P. Bergveld, A general model to describe the electrostatic potential at electrolyte oxide interfaces, Advances in Colloid and Interface Science 69 (1996) 31 - 62). Let the potential $\psi_{ad}$ correspond to this adsorption electric charge. Formally, it can be determined through the work $e \cdot \psi_{ad}$ which must be performed to overcome it with a single charge. Generally, this potential depends on the solution-semiconductor potential drop $V_G$. Since the semiconductor potential is kept constant, $\psi_{ad}$ is a function of $\varphi_{sol}$. Then $V_G$ in (7) will change by the value of $\psi_{ad}(\varphi_{sol})$:

$$V_G = \varphi_{sol} + \psi_{ad}\left(\varphi_{sol}\right) - \varphi_{sc} = -\frac{\varepsilon_{F0}^{sc} - \mu_e}{e} + U + \psi_{ad}\left(\varphi_{sol}\right) \quad . \tag{11}$$

The change in $V_G$ with changing U at a constant chemical potential $\mu_e^{sol}$ will be equal to:

$$\left(\frac{\partial V_G}{\partial U}\right)_{\mu_e^{sol}} = 1 + \frac{\partial \psi_{ad}}{\partial U} = 1 + \frac{\partial \psi_{ad}}{\partial \varphi_{sol}} \frac{\partial \varphi_{sol}}{\partial U} = 1 + \frac{\partial \psi_{ad}}{\partial \varphi_{sol}} \quad . \tag{12}$$

The change in Vg at a constant U and changing chemical potential $\mu_e$

$$\left(\frac{\partial V_G}{\partial \mu_e}\right)_U = \frac{1}{e} + \frac{\partial \psi_{ad}}{\partial \mu_e} = \frac{1}{e} + \frac{\partial \psi_{ad}}{\partial \varphi_{sol}} \frac{\partial \varphi_{sol}}{\partial \mu_e} = \frac{1}{e}\left(1 + \frac{\partial \psi_{ad}}{\partial \varphi_{sol}}\right) \quad . \tag{13}$$

From (12) and (13) it follows that in the considered system a change in the chemical potential of electrons in an electrolyte (4) or in the adsorption of particles from a solution on the surface of a dielectric (6) is equivalent, up to an elementary charge, to the potential change at the voltage source (7).

Now, let the semiconductor surface in the system under consideration be a channel located between the drain (8) and the source (9) of a field-effect transistor. This structure is called an «ion-sensitive field-effect transistor» (*ISFET*) in the literature and is a subtype of a conventional MOS transistor utilizing an electrolyte solution instead of a metal gate (Fig. 2).

Let's set a constant voltage $V_{DS}$ (10) between the drain (8) and the source. Then the transistor drain current $I_{DS}$ will be determined by the voltage $V_G$ between the liquid and the semiconductor substrate (8). At a constant chemical potential of electrons in the electrolyte this voltage is uniquely determined by the voltage U. When the latter changes, the drain current will unambiguously change:

$$\Delta I_{DS} = f\left(\Delta U\right)\big|_{V_{DS},\mu_{sol}} \quad , \tag{14}$$

If, on the other hand, the chemical potential of electrons in the electrolyte changes within the system, then at a constant voltage U the change in the drain current will be unambiguously determined by the change in the chemical potential $\Delta \mu_e$ :

$$\Delta I_{DS} = f\left(\frac{\Delta \mu_e}{e}\right)\Big|_{V_{DS},U} \quad , \tag{15}$$

where the *f* function is the transfer volt-ampere characteristic of the field-effect transistor.

Having identified the dependency *f*(U) with a constant $\Delta \mu_e$ and placing the structure in a medium with a relatively slowly changing electron chemical potential, one can track this change as follows:

$$\frac{\Delta\mu_e}{e} = f^{-1}\left(\Delta I_{DS}\right)\Big|_{V_{DS},\mu_e} , \qquad (16)$$

where $f^{-1}\left(\Delta I_{DS}\right)\Big|_{V_{DS},\mu_e}$ is the function inverse to function (15).

Thus, the ISFET structure can be used as a sensor detecting the changes in the electron chemical potential in a solution which is the structure's gate.

Since the chemical potential of electrons in a solution is equivalent to the oxidation-reduction (redox) potential measured relative the absolute electrochemical scale, i.e., the free electron energy level in a vacuum (Khan S. U. M., Kainthla R. C., Bockris J. O. M. The redox potential and the Fermi level in solution //Journal of Physical Chemistry. - 1987. - V. 91. - No. 23. - P. 5974-5977.):

$$\mu_e = -neV_{redox}\left(vac.scale\right) ,$$

$$V\left(vac.scale\right) = V\left(NHE\right) - 4,6B , \qquad (17)$$

(where $V(vac.scale)$ is the potential relative the absolute electron energy in a vacuum, $V(NHE)$ is the potential relative the hydrogen electrode), the structure under consideration can be used as a sensor detecting the redox potential changes during the course of physicochemical phenomena in the gate.

In the state of equilibrium with the reference electrode, the electrochemical potential of the electrons is equal to the electrons' Fermi level in the reference electrode. This means that the redox reactions during which electronic exchange occurs in the solution and with the reference electrode, are in a state of thermodynamic equilibrium.

All the redox processes in solution can be written in the form of a generalized reaction equation:

$$ox_1 + red_2 + \cdots + red_m \rightleftharpoons red_1 + ox_2 + \cdots + ox_m. \qquad (18)$$

where $ox_i$, $red_i$ are, respectively, the acceptors (oxidizing agents) and donors (reducing agents) forming the i-th redox pair, where m is the number of such redox pairs, $1 \le i < m$, $m \ge 2$. Each redox pair is characterized by an electronic exchange, in which $n_i$ electrons participate:

$$ox_i + n_i e \rightleftharpoons red_i. \qquad (19)$$

The equilibrium electrochemical potential of electrons $\overline{\mu_e}$ can be determined from this condition of the electrochemical potentials equality in the right and left sides of (19), in the equilibrium condition:

$$\overline{\mu}_e = \frac{1}{n_i}\left(\overline{\mu}_i^{ox} - \overline{\mu}_i^{red}\right). \qquad (20)$$

From the last expression it follows that

$$\frac{1}{n_j}\left(\overline{\mu}_j^{ox} - \overline{\mu}_j^{red}\right) = \frac{1}{n_i}\left(\overline{\mu}_i^{ox} - \overline{\mu}_i^{red}\right). \qquad (21)$$

for all $1 \le i,j < m$. Summing (21) over $i$, it is also possible to express the electrochemical potential in terms of all the electrochemical potentials of the redox system (18):

$$\overline{\mu}_e = \frac{1}{N_e}\left(\sum_{i=1}^{n}\left(\overline{\mu}_i^{red} - \overline{\mu}_i^{ox}\right)\right)$$

(22)

where

$$N_e = \sum_{i=1}^{m} n_i$$

Using the general dependence of the electrochemical potential on the concentration ($\mu = (\mu_0 + k_B T ln(c_0/c)_0 + ne\varphi)$ values and the fact that the electrical potential in a liquid is constant in a state of equilibrium, it is possible to obtain the dependence of the electrons chemical potential on the concentration of the redox system components:

$$\mu_e = \mu_0 + \frac{1}{N_e}\ln\frac{\prod_i [red_i]}{\prod_i [ox_i]}$$

(23)

and

$$\mu_0 = \frac{1}{N_e}\sum_{i=1}^{m}\left(\mu_{oi}^{red} - \mu_{oi}^{ox}\right)$$

(24)

It can be shown that the (23) expression in the form of a system's redox potential expressed through the standard electrode potentials $V_i$ of all the redox pairs in the system will look as follows:

$$V_{redox} = \frac{1}{N_e}\left(\sum_{i=1}^{m}V_i + \frac{k_B T}{e}\ln\frac{\prod_i [red_i]}{\prod_i [ox_i]}\right)$$

(25)

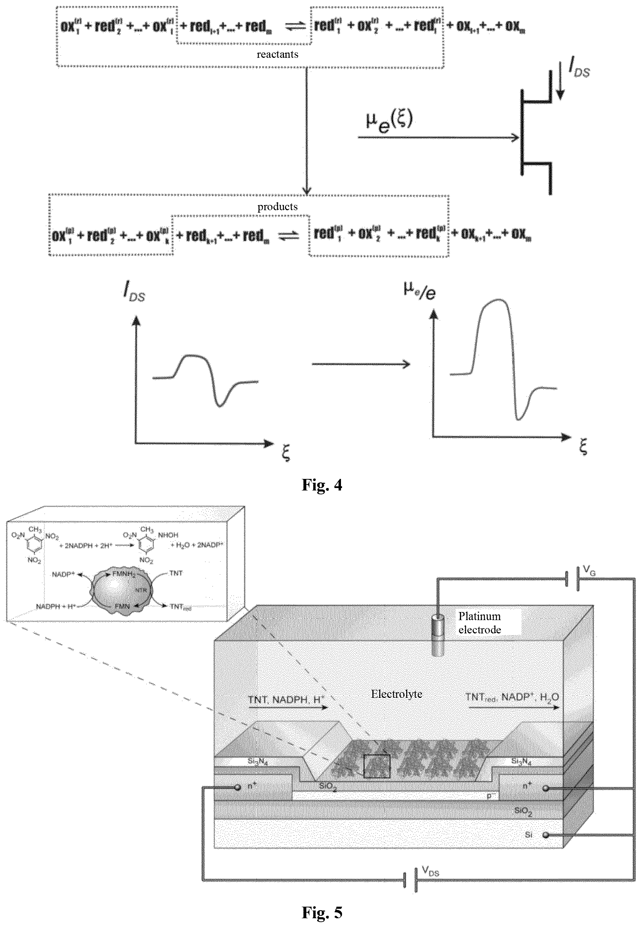

Let a chemical reaction (Fig. 4) be initiated in the considered redox system, e.g., upon the introduction of a catalyst into the system utilizing the components of the redox system (18), which generally can be both oxidizers and reductants, both on the right and left. Fig. 4 shows this reaction in a vertical manner. Without loss of generality, let all the stoichiometric factors of the reaction be equal. Let's isolate and number (irrespective of the redox pair conjugation index i) with the j index the reactants of this reaction ($j$= 1... $l$) and with the $k$ index - the reaction products (k=1...p). Then such a reaction can be written in the following general form:

$$\sum_{l}^{l}\left(ox_j + red_j\right) \rightarrow \sum_{p}^{l}\left(ox_k + red_k\right)$$

(26)

During such a reaction (the reaction is depicted from top to bottom in the figure) the redox system will shift from the equilibrium state since the redox pair components concentrations will change. This will lead to a change in the chemical potential (**23**). Let the chemical reaction proceed much slower than the electronic exchange of the electrolyte with the reference electrode, then to each of its states (chemical variable $\xi$) a quasi-equilibrium redox system and the corresponding electronic chemical potential will correspond. The change in the electrons chemical potential can be detected by a transistor and, thus, the «redox profiles» of the reaction can be obtained.

The rate of the electronic exchange between the electrolyte and the reference electrode is generally characterized by the reference electrode impedance; the lower it is, the faster the quasi-equilibrium occurs and the faster the dynamic processes are that can be measured.

On the other hand, the measuring electrode and the external environment should not affect the establishment of this quasi-equilibrium state. To fulfill this condition, their impedances should considerably exceed the measuring electrode impedance.

The definitions and registration data of the «redox profiles» can be used in many areas where it is necessary to study the dynamic processes. The use of this invention is not limited to the considered examples which are given solely to explain the principle and nature of the invention.

The invention can be implemented using two metal electrodes or field structures of different configurations and types, and its applicability does not depend on the ISFET design and structure.

The device can be used to study the enzymatic reaction activities, e.g., to determine the primary activity and substrate specificity of an enzyme, its catalytic activity and the enzymatic reaction rates, since any enzymatic reaction is associated with the enzyme exchange with water molecules, thus changing the electrons chemical potential in the gate electrolyte. In this case, the reaction rate (hence, the concentration of the enzyme and substrates) determines the transistor channel current . Therefore, the invention can be used to determine the system component concentrations in a matter of seconds.

In the case of microvolumes, the chemical reactions are not bound by diffusion restrictions and proceed quickly; therefore, the system's ability to quickly respond to the changes occurring therein becomes a significant advantage. Additionally, since various intermediate stages are formed in the process of biocatalysis, the rapid detection of a change in the electron redox potential allows detecting these states and providing information on their quantity and distribution during the reaction, which opens up new possibilities for studying the reaction mechanisms, which is an important aspect in drug development and in academic catalysis research. Additionally, due to the fast system response, the invention can be used within the systems for studying the fast pre-stationary reaction kinetics.

It is promising to use the invention for the determination of interactions of various active substances, such as potential drugs, inhibitors, hormones, steroids and other compounds affecting the catalytic activity of various biological and biomimetic molecules - proteins, receptors, ribozymes, nucleic acids. Additionally, the change in the redox potential can be used as an indicator of the cellular processes activity (e.g., the opening of potassium channels), which can be used to study the toxicity of certain drugs under development and the cellular chemical signaling circuits' activating and inhibiting mechanisms.

One of the main competitive advantages of the invention in this case will be the use of direct detection which makes it possible to measure any reaction occurring in the electrolyte environment. Such detection eliminates the need to use conjugates of molecules with optical or redox labels during the reactions, thus making the use of additional reagents obsolete. Moreover, the modern micromachining technologies make it possible to create arrays of elements based on the invented sensor, which makes it possible to carry out mass screening of all the processes described above.

The described measurements can be carried out in different aqueous buffer solutions, depending on the chemical reaction. The solutions popular in biochemistry, i.e., phosphate, acetate, borate, TRIS- or HEPES-based solutions in various pH value' or ionic strength ranges can be used. In addition to the aqueous solutions, e.g., for studying the organic reactions catalysis processes, other organic polar solvents such as alcohols or acetonitrile or mixtures of organic solvents with water can be used. The redox potential changes can also be carried out in special cellular environments and in biological fluids: in blood, lymph, saliva, sputum or urine.

It is also worth noting that the invention can be used to study any reactions the components of which are soluble in an aqueous solution. Moreover, with an appropriate adaptation, all of the above can also apply to the systems with homogeneous and heterogeneous catalysis where an electrolyte or an electrolyte melt is used as a transistor gate. The device can be used as an oxidation-reduction reactions' detector in various analytical systems for the determination of substances, e.g., in chromatography.

The temporal dependencies of the redox potential changes will differ from reaction to reaction, so the invention can also be used to identify a particular reaction. In the case of one enzymatic reaction, the temporal dependencies can be used to identify substrates if the temporal dependence of the redox potential for different substrates is different.

The invention can be used for identification of the metal-organic complexes formation or to detect intermediates in organic chemistry in order to establish the type or mechanism of the ongoing reaction. The reaction mechanisms identification, in turn, opens up new possibilities in the development of new effective catalysts and, as a consequence, in the creation of new methods and approaches to the preparation of both new compounds and, in general, the materials with new properties.

Another type of the invention use is studying the thermodynamic values of the ongoing reactions. For instance, for the redox reactions the relationship is known that links the electrode potential (redox potential) with the Gibbs energy in the following reaction:

$$\Delta G = -n\Delta V_{redox} F \, ,$$

(27)

therefore, the reaction's redox profile reflects the change in the Gibbs energy of the system, i.e., the reaction's energy profile.

To confirm the theoretical assumptions, examples are given below for various types of ISFET structures designed to determine the electron redox potential changes in a liquid gate during various chemical reactions.

Example 1

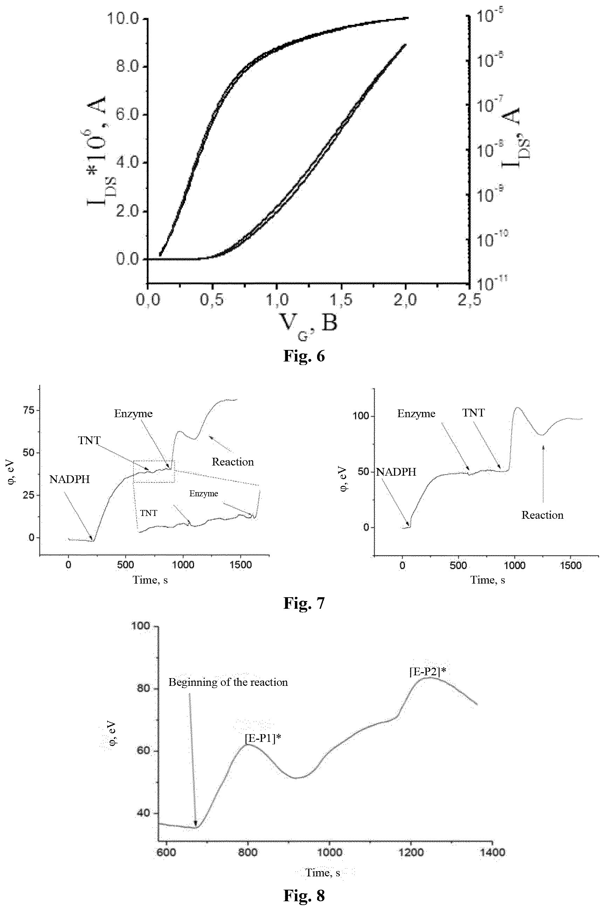

Samples of ISFET structures were fabricated on SOI SIMOX wafers (initial parameters: the working silicon layer - 192 nm, hidden silicon layer thickness - 380 nm, p-type doping, conductivity 12-20 $\Omega$*cm according to the developed processing route using CMOS IC production technology based on 1.2 $\mu$m layout rules (Fig. 5). The slope of the subthreshold characteristic (S) for the experimental samples was ~ 90 mV / current decade. The threshold voltage was determined by the tangent method and was 0.75 V (Fig. 6). The voltage was fixed at the reference electrode, so that the structure remained in the subthreshold mode. Further on, the drain current dependence on time was recorded. During the signal recording, a reaction was initiated by adding reaction components to the system.

To study the dynamic redox potential changes in the system during the ongoing catalytic reaction, the temporal changes in the surface potential after the substrate addition to the model homogeneous system comprising a buffer solution, NADPH and *E. coli* nitroreductase were analyzed. Trinitrotoluene was used as the main model substrate, since it is for this substrate that the data exist that experimentally confirm the catalysis intermediates qualitative composition (Fig. 7). The investigated reaction is presented in Fig. 8. The process of two electrons transfer during the reduction reaction with the participation of nitroreductase occurs in two stages by the two-substrate substitution (bi-bi-ping-pong) mechanism. The ping-pong mechanism implies that during the first stage the enzyme binds to the donor substrate of the group. The donor group is transferred to the enzyme making it active. In so doing, the donor substrate, not containing the donor group by this time, is released in the form of a first reaction product. During the second catalysis stage the enzyme activated in this way interacts with the second substrate, transferring the donor group thereupon.

A dynamic redox potential change over time suggests that two intermediate enzyme-product complexes are formed in the course of the reaction. The intermediate complexes are formed in the region of 800 sec of the presented graph (Fig. 8) (in ~ 120 sec after the reaction initiation) and in the region of 1250 sec (in ~ 770 sec after the reaction initiation) for the initial substrate concentration of $10^{-7}$ M. According to the literature, it can be assumed that in the process of the redox potential changing two successive reduction reactions are visualized for the solution. The first hump corresponds to the reduction of TNT down to 4-nitroso-2,6-dinitrotoluene and its isomer, and the second is associated with the reduction of the nitroso compound down to 4-hydroxylamine-2,6-dinitrotoluene and its *ortho* isomer.

Thus, in this example it has been shown that monitoring of the redox potential dynamic changes allows detecting the formation of intermediates during biocatalysis with the participation of *E. coli* nitroreductase.

Example 2

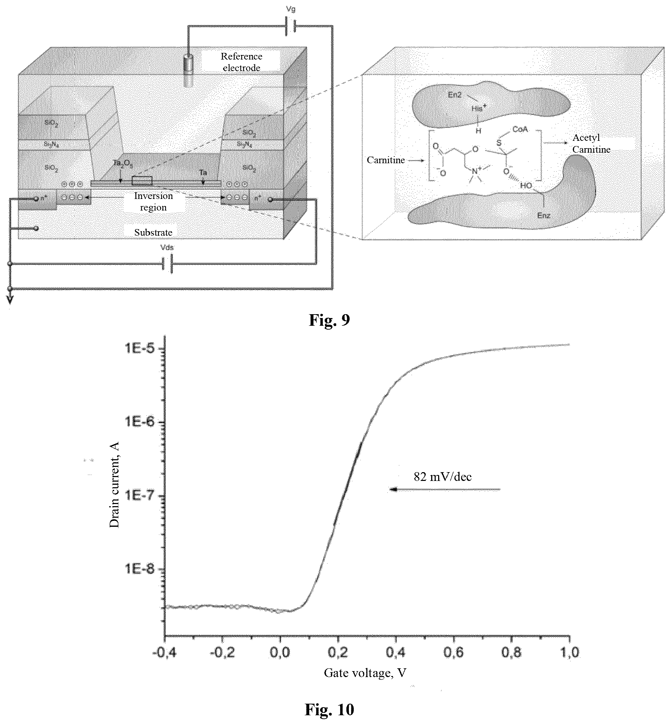

Samples of n-type semiconductor structures with a floating tantalum gate were fabricated using standard CMOS technology using p-type 12-22 $\Omega$* silicon wafers and integrated into MOS signal processing structures. The sensor structures were formed after the formation of MOS transistors before the standard metallization stage. For this, a 50 nm tantalum layer was formed on a silicon oxide gate dielectric. After the metallization forming operation and the surface passivation, the tantalum surface was oxidized in deionized water. The final structure is shown in (Fig. 9). The slope of the subthreshold characteristic (S) for the experimental samples was ~ 82 mV / current decade (Fig. 10).

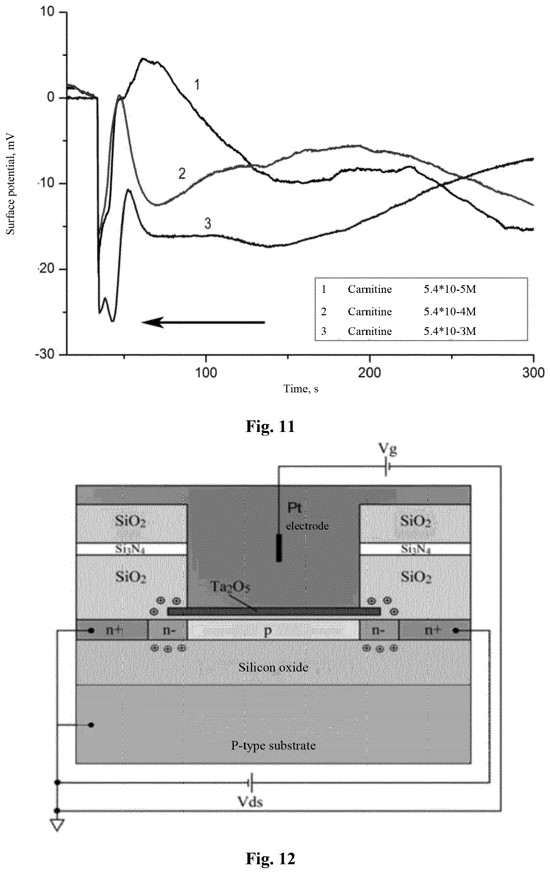

These structures were used to detect the anion formed in the catalytic acetyl transferase carnitine enzyme center. For this, an open microcell was formed on the crystal surface with sensors, into which a buffer solution was introduced. A platinum electrode was used as a reference electrode, to which a fixed voltage was applied so that the structure was in a subthreshold mode. The temporal dependencies of the drain current were recorded during the enzymatic reaction initiation in the microcell on the crystal surface. Carnitine acetyl transferase (EC.2.3.1.7) is an enzyme that catalyzes the reversible acetyl group transfer between coenzyme A and L-carnitine. The reaction proceeds by a mechanism involving no ordered joining of two substrates in the catalytic center accompanied by an intermediate anion formation (Fig. 9). By varying the concentration of one of the substrates at a constant concentration of the second, it is possible to match up the conditions under which this anion detection occurs (Fig. 11).

Example 3

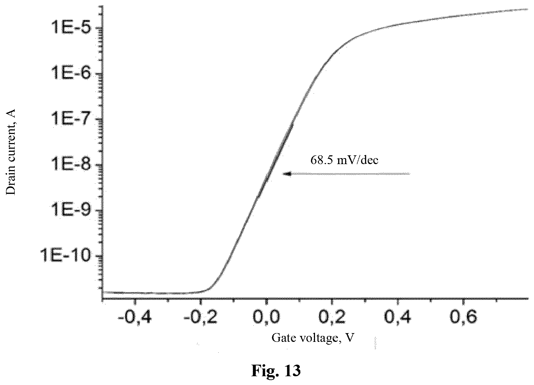

Completely depleted field nanostructures were fabricated using standard SOI CMOS technology based on the design standards of 1.2 $\mu$m. For the manufacture, the SIMOX p-type wafers were used with a resistance of 12-20 $\Omega$*cm with a 0.18 $\mu$m working silicon layer and a 0.38 $\mu$m dielectric layer. The floating valve was made from tantalum pentoxide. The fabricated structure is shown in (Fig. 12). For measurements, the structures with a channel length of 100 $\mu$m and a 6 $\mu$m width were used. A platinum electrode was used as the reference electrode. The slope of the experimental samples subthreshold characteristic (S) was ~ 68 mV / current decade (Fig. 13).

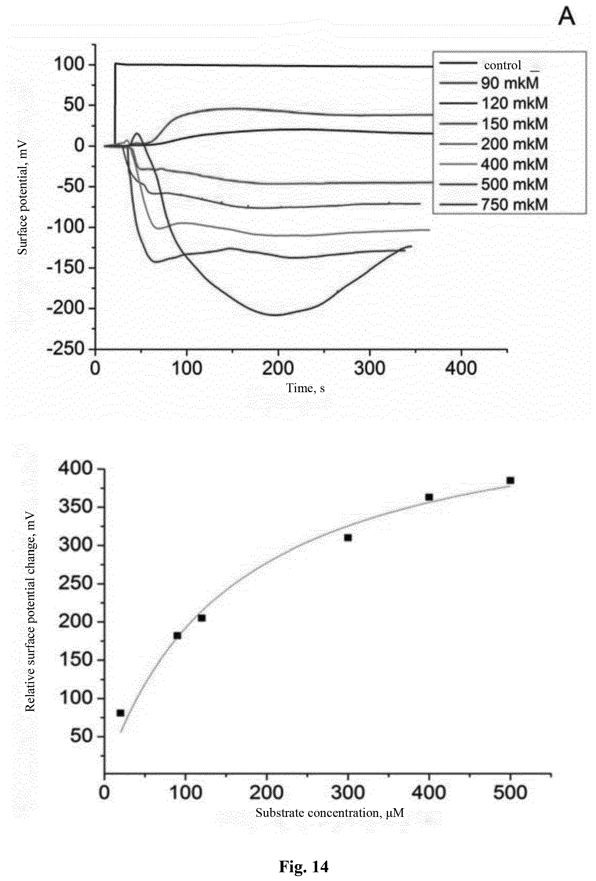

These structures were used to determine the kinetic parameters of the horseradish peroxidase reaction with two substrates: 3.3', 5.5'-tetramethylbenzidine (TMB) and 2.2'-azino-bis-(3-ethylbenzthiozoline-6-sulfonic acid) diammonium salt (ABTS). For this, a well-shaped microcell was formed on the crystal surface with field structures. 27 $\mu$l of buffer solution, 1.5 $\mu$l of TMB or ABTS in different concentrations and horseradish peroxidase were added into this cell up to the final concentration of $1*10^{-11}$ M. At a fixed reference electrode voltage (so that the structure remained in the subthreshold mode during the measurements), the temporal drain current dependence was recorded upon the addition of 1.2 $\mu$L of $H_2O_2$ into the cell. The current values were converted to the surface potential. To determine the Michaelis constants, the relative potential change at 300 s for TMB and 700 s for ABTS after the addition of $H_2O_2$ was compared with the data obtained when the peroxide was added to a mixture that did not contain the corresponding substrates. With the substrate concentration increase, the reaction rate also increases, and, accordingly, the dissimilarity to the control becomes greater. Based on the signal generated by the transistor, the calculated Michaelis constant values were (294 $\pm$ 87) $\mu$M for TMB and (317 $\pm$ 49) $\mu$M for ABTS (Fig. 14A, Fig. 14B). The said data are in good agreement with the spectrophotometric data (222 $\pm$ 40) $\mu$M for TMB and (491 $\pm$ 57) $\mu$M for ABTS. This example shows that the proposed invention allows determining the kinetic reaction parameters, wherein the determining of the Michaelis constants using semiconductor structures required one order less of horseradish peroxidase.

**Example 4**

The SOI structures with a sensitive tantalum pentoxide surface were used to determine the possibility of the reaction's redox profile detection during enzymatic catalysis of enolase from S. *cerevisiae* (EC 4.2.1.11) baker's yeast, triose phosphatisomerase of S. *cerevisiae* (EC.5.3.1.1) baker's yeast and T4 DNA ligase (EC. 6.5.1.1).

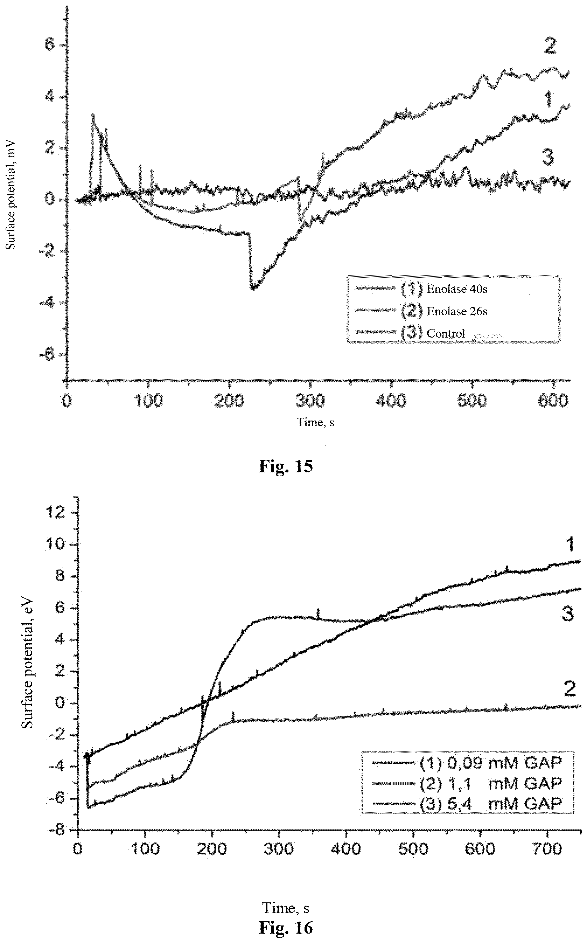

To study the possibility of intermediates detection in a reaction catalyzed by enolase (phosphopyruvate hydratase), the SOI structures with a sensitive tantalum oxide surface described in example 3 were used. The reaction was activated by adding 1.2 $\mu$l of enzyme with an activity of 14.4 U/ml into 35 $\mu$l of buffer solution (Tris/HCl: 5 mM NaCl, 2 mM Tris-HCl [pH 7.6], 1 mM KCl, 1 mM $MgCl_2$, 0.5 mM $CaCl_2$, total molarity 9.5 mM) containing 1.4 $\mu$L of a substrates mixture from a commercial kit for measuring the enzyme activity. Figure 15 shows the dynamic change in the electrons redox potential in the gate during the reaction. It can be noted that after the initiation of the reaction under these conditions, according to the profiles, a formation of an intermediate product at approximately 230 s upon a sharp drop in the surface potential can be assumed for the first profile, as well as a similar dip at 290 s in the another experiment's profile.

Triose phosphate isomerase (D-glyceraldehyde-3-phosphate ketol-isomerase, EC 5.3.1.1) is a glycolysis enzyme that catalyzes the process of the idioxyacetone phosphate and D-glyceraldehyde-3-phosphate interconversion. The possibility of obtaining a redox profile of the reaction was investigated using the structures described in example 3. In 21 $\mu$l of a buffer solution for triose phosphate isomerase (15 mM Tris/HCl, pH 7.2, containing 0.02% of bovine serum albumin), 2 $\mu$l of GAP (glyceroaldehyde-3-phosphate) of various concentrations were added. Then, to initiate the reaction, 1.5 $\mu$L of an enzyme with a measured activity of 0.4 U/mL was added to the mixture. The resulting profile as a function of the GAP substrate concentration is shown in Fig. 16.

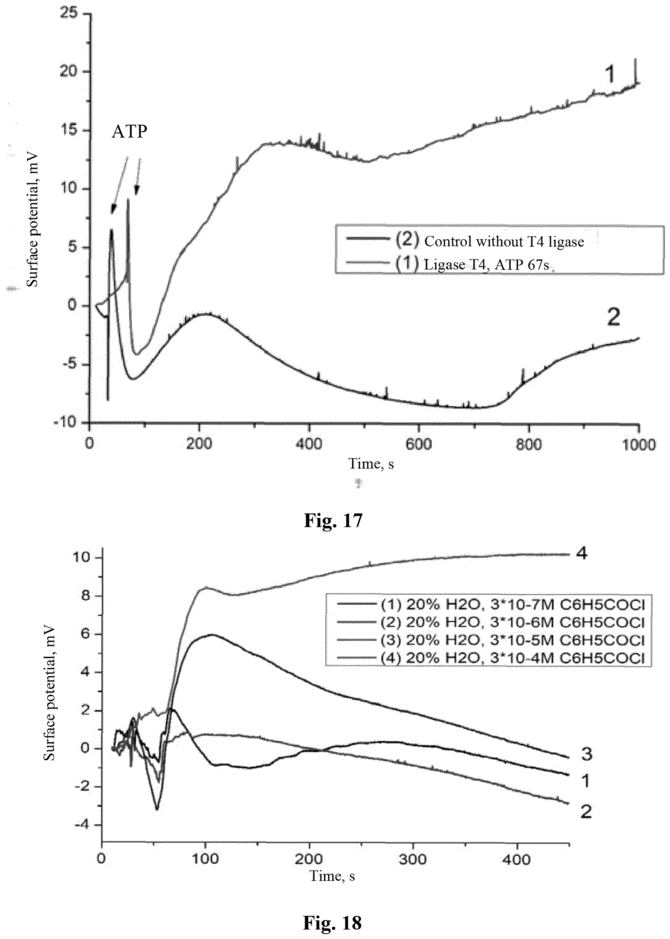

To measure the redox profile during the DNA ligation reaction with the participation of T4 DNA ligase, structures similar to those of Example 3 were used, with the 100 $\mu$m channel width and length. To the synthesized oligonucleotides (the working names of the sequences are temp1, penta1, com) with a concentration of 1 $\mu$M in 33 $\mu$L of a buffer solution (8.5 mM Tris/HCl, 2.5 mM MgCl2, 1.25 mM TCEP), 2.15 $\mu$L ATP was added in the well (with an initial concentration of 10 mM). If T4 DNA ligase was present in the well, the signal increased; at the same time, in the absence of the enzyme the signal decreased after the addition of ATP, returning to the baseline after 1,000 seconds (Fig. 17).

Thus, this example shows that the reactions of the enzymes belonging to the lyase, isomerase and ligase groups can be detected, and their catalysis mechanisms can be potentially studied using the proposed invention.

**Example 5**

To demonstrate the possibility of studying the organic reaction mechanisms, a study of the solvolysis reaction profile changes has been conducted, with changing acetone/water ratio. It is known from the literature that the benzoyl chloride solvolysis reaction proceeds based on the nucleophilic substitution mechanism. Depending on the conditions, the reaction can proceed by two mechanisms: $SN_1$ and $SN_2$. The Sn1 mechanism assumes the formation of an intermediate carbocation followed by a nucleophilic attack, i.e., the reaction proceeds in two stages, with the formation of an intermediate. The $SN_2$ mechanism assumes that the reaction proceeds in one stage, without the formation of an intermediate. In some cases, the higher the polarity (and protonity) of the solvent, the higher the probability of the reaction proceeding by the $SN_1$ mechanism. Since in reality, in the course of the reaction the two mechanisms always compete, changing the solvent polarity it is theoretically possible to observe the transition of one of the reaction mechanisms (the energy profile of the reaction changes).

To demonstrate the possibility of using the invention for studying the organic reaction mechanisms, experiments were carried out using the structures described in example 3, according to the following scheme: 1 $\mu$l of benzoyl chloride in various concentrations was added to 32 $\mu$l of an acetone-water mixture. The dependence of the dynamic redox profile change on the benzoyl chloride concentration is shown in Fig. 17. According to Fig. 18, it can be assumed that in a solvent with 20% water and 80% acetone the $SN_2$ mechanism would be realized (without the formation of an intermediate). To increase the $SN_1$ reaction rate, the solvent's polarity in the water-acetone solution was subsequently changed by increasing the percentage of water.

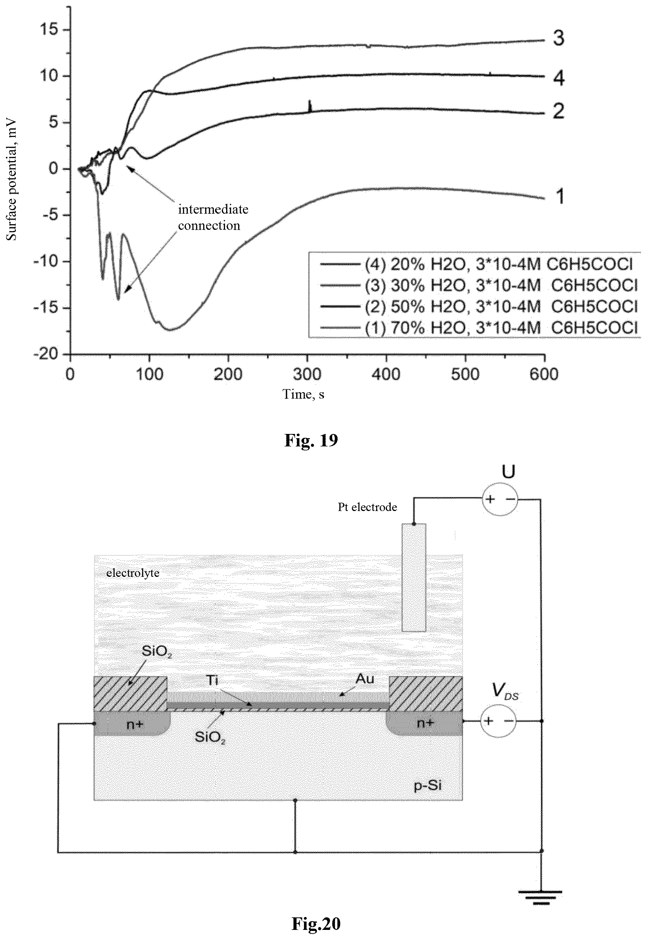

The experimental data show that with an increase of the water percentage in the acetone-water solution, an intermediate compound begins to be registered, which indicates that with an increase of the solvent's polarity the $SN_1$ monomolecular substitution mechanism begins to dominate in the nucleophilic substitution reaction (Fig. 19). Changing the solvent leads to an improvement in the chloride ion solvation, and, consequently, to an increase in the rate of the carbocation formation (the $Sn_1$ mechanism).

Therefore, this example shows that the invention is not limited to its use for the energy states visualization during biochemical enzymatic reactions and can be used to study catalytic processes in a wide range of chemical reactions.

**Example 6**

Completely depleted field nanostructures were fabricated using standard SOI CMOS technology based on the design standards of 1.2 $\mu$m. For the manufacture, the SIMOX p-type wafers were used with a resistance of 12-20 $\Omega$*cm with a 0.18 $\mu$m working silicon layer and a 0.38 $\mu$m dielectric layer. Additionally, a Ti-based adhesive layer was deposited on the gate dielectric surface, on top of which 50 nm of gold was deposited. The fabricated structure is shown in FIG. 20. For measurements, the structures with a channel length of 100 $\mu$m and a width of 6 $\mu$m were used. A platinum electrode was used as the reference electrode.

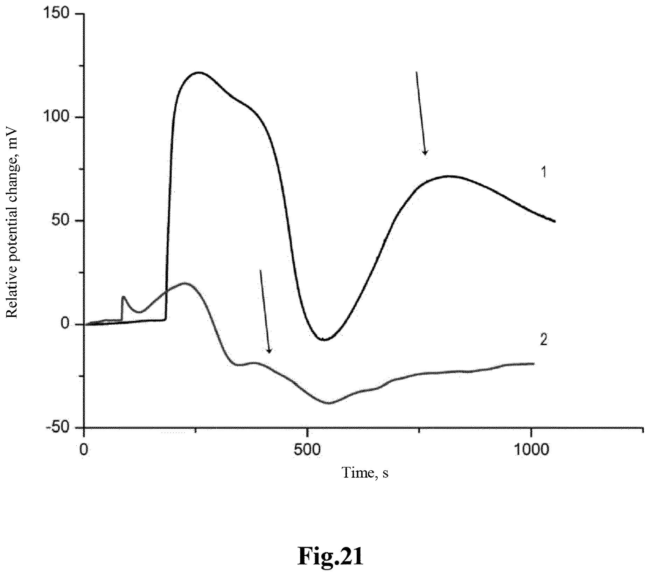

These structures were used to visualize the changes of the electrons chemical potential during the horseradish peroxidase reaction with 3,3', 5,5'-tetramethylbenzidine (TMB). For this, a well-shaped microcell was formed on the crystal surface with field structures. 35 $\mu$l of buffer solution containing $5*10^{-5}$ M of TMB was added to this cell. At a fixed reference electrode voltage (so that the structure remained in the subthreshold mode during the measurements), the temporal drain current dependence was recorded upon the addition of $H_2O_2$ into the cell up to the final concentration of $2*10^{-5}$ M. Fig. 21 shows that a change in the surface potential (1) makes it possible to detect the formation of an intermediate complex. Additionally, in a cell of the same volume, measurements of the dynamic redox potential changes were carried out using two platinum needles as the reference electrode and the indicator electrode, placed at a distance of less than 2 mm. The resulting temporal dependence is shown in Fig. 21, (dependence (2)). These results demonstrate that both two-electrode structures can be used to visualize the dynamic redox potential changes; one of the structures with a larger impedance difference is more responsive to the dynamic changes.

**Claims**

1. A system for dynamic measurement of the redox potential in an electrolyte with a limited volume for studying the ongoing chemical reactions therein, including at least one reference electrode and at least one indicator electrode immersed in the electrolyte and connected to an external circuit,

   wherein the reference electrode is configured to freely exchange electrons with the electrolyte and has a low impedance relative to the indicator electrode impedance, the reference electrode being connected to a constant voltage source or a common ground potential, wherein an offset voltage is applied thereon from an external circuit; wherein the indicator electrode has a high impedance relative to the reference electrode impedance, which prevents the electronic exchange with the electrolyte solution, and the indicator electrode is connected to an external circuit for measuring the potential thereon;
   wherein the ratio of the measuring electrode impedance to the reference electrode impedance is at least 5;
   wherein the distance between the reference electrode and the indicator electrodes does not exceed 1 cm, the electrolyte volume does not exceed 10 cm$^3$ and
   the vessel limiting the electrolyte volume provides a high electrolyte/zero-ground-potential impedance relative the indicator electrode impedance, with the ratio equaling or exceeding 5.

2. The system according to claim 1, **characterized in that** the reference electrode impedance value is between 5 Ω and 500 kΩ.

3. The system according to claim 1, **characterized in that** the indicator impedance value is 5 kΩ or more.

4. The system according to claim 1, **characterized in that** the electrolyte/zero-ground-potential impedance is 50 kΩ or more.

5. The system according to claim 1, **characterized in that** an ion-sensitive field-effect transistor is used as the indicator electrode, wherein the liquid electrolyte solution is used as a liquid gate isolated from the semiconductor by a gate dielectric, and a large area metal electrode is used as the reference electrode, the area of the metal electrode exceeding the gate area of the ion-sensitive field-effect transistor by more than 100 times.

6. The system according to claim 5, **characterized in that** a dielectric is used as the gate dielectric material of the ion-sensitive field-effect transistor contacting the electrolyte solution, the said dielectric being selected from the following dielectric materials: $Ta_2O_5$, $Si_3N_4$, ZrO, $HfO_2$, $SiO_2$, $Al_2O_3$, or their compositions.

7. The system according to claim 5, **characterized in that** the dielectric of the ion-sensitive field-effect transistor can be further coated with a layer of one of the following noble metals: Ag, Au, Pd, Pt, Ru, Rh, Ir, Os or a composition or an alloy based thereon.

8. The system according to claim 5, **characterized in that** the ion-sensitive field-effect transistor stays in a subthreshold or inverse mode during measurements

9. The system according to any one of claims 1-8, **characterized in that** it further includes a means of obtaining data for the purpose of studying and researching the chemical processes based on the temporal electrons redox potential changes in an electrolyte solution.

10. The system according to claim 9, **characterized in that** the means of obtaining data for the purpose of studying and researching the chemical processes is configured to plot the energy changes curve during a chemical reaction.

11. The system according to claim 9, **characterized in that** the means of obtaining data for the purpose of studying and researching the chemical processes is configured to visualize and study the transient states during a chemical reaction based on the energy changes curve during the chemical reaction.

12. The system according to claim 9, **characterized in that** the means of obtaining data for the purpose of studying and researching the chemical processes is configured to obtain thermodynamic and kinetic constants and values of a chemical reaction from the dependence of energy changes during chemical reactions.

13. A method for studying and researching the chemical processes in a liquid electrolyte solution during a chemical reaction, comprising the following steps:

(a) providing the system according to any of the claims 1-8,
(b) connecting the reference electrode to a constant potential through a voltage source or the common ground potential,
(c) determining the electrons redox potential change in a liquid solution, comprising the following:

(i) determining the electrical potential change over time at the indicator electrode using an external circuit,
(ii) obtaining, based on the changes measured in step (i), the temporal redox potential changes curve in the electrolyte,

(d) obtaining data for the purpose of studying and researching the chemical processes based on the temporal redox potential changes.

reference electrode

indicator electrode

$\sim \mu_e$

U

$Z_{REF}$

$\sim \mu_e$

$Z_{IND}$

V

$Z_{PAR}$

**Fig. 1**

**Fig. 2**

**Fig. 3**

EP 4 047 358 A1

Fig. 4

Fig. 5

**Fig. 6**

**Fig. 7**

**Fig. 8**

**Fig. 9**

**Fig. 10**

| 1 | Carnitine | 5.4*10-5M |
| 2 | Carnitine | 5.4*10-4M |
| 3 | Carnitine | 5.4*10-3M |

**Fig. 11**

**Fig. 12**

**Fig. 13**

A

Fig. 14

**Fig. 15**

Time, s

**Fig. 16**

**Fig. 17**

**Fig. 18**

**Fig. 19**

**Fig.20**

**Fig.21**

| INTERNATIONAL SEARCH REPORT | International application No. |
|---|---|
| | PCT/RU 2019/000861 |

**A. CLASSIFICATION OF SUBJECT MATTER**

***G01N 27/26 (2006.01)***

According to International Patent Classification (IPC) or to both national classification and IPC

**B. FIELDS SEARCHED**

Minimum documentation searched (classification system followed by classification symbols)

G01N 27/00, 27/26, 27/333, 27/414, H01L 21/00, 21/02, 21/306, 21/8234, H01L 29/00, 29/16, 29/66, 29/78

Documentation searched other than minimum documentation to the extent that such documents are included in the fields searched

Electronic data base consulted during the international search (name of data base and, where practicable, search terms used)

PatSearch, Espacenet, Patentscope, Google.ru

**C. DOCUMENTS CONSIDERED TO BE RELEVANT**

| Category* | Citation of document, with indication, where appropriate, of the relevant passages | Relevant to claim No. |
|---|---|---|
| A | RU 2244917 C1 (TAMBOVSKY GOSUDARSTVENNY TEKHNICHESKY UNIVERSITET) 20.01.2005 | 1-13 |
| A | DE 3883885 D1 (MOLECULAR DEVICES CORP.) 14.10.1993 | 1-13 |
| A | RU 2188411 C1 (TAMBOVSKY GOSUDARSTVENNY TEKHNICHESKY UNIVERSITET) 27.08.2002 | 1-13 |
| A | US 8668822 B1 (TORSTEN PECHSTEIN) 11.03.2014 | 1-13 |
| A | US 2015/0268189 A1 (ECOLE POLYTECHNIQUE FEDERALE DE LOUSANNE) 24.09.2015 | 1-13 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 July 2020 (28.07.2020)  RU | 30 July 2020 (30.07.2020) |

| Name and mailing address of the ISA/ | Authorized officer |
|---|---|
| | |
| Facsimile No. | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4020830 A

**Non-patent literature cited in the description**

- **TRASATTI S.** The absolute electrode potential: an explanatory note. *Recommendations 1986) //Pure and Applied Chemistry,* 1986, vol. 58 (7), 955-966
- **FORSTMANN F.** The Fermi level in electrolytes-about electrochemical potentials at electrolyte-electrode interfaces. *AIP Conference Proceedings. -AIP,* 2008, vol. 979 (1), 181-194
- **D. E. YATES ; S. LIVINE ; T. W. HEALY.** Site-binding model of the electrical double layer at the oxide/water interface. *J. Chem. Sot., Farnduy Trans.,* 1974, vol. I (70), 1807-1818
- **SATO N.** Electrochemistry at metal and semiconductor electrodes. Elsevier, 1998
- **R. VAN HAL ; J. EIJKEL ; P. BERGVELD.** A general model to describe the electrostatic potential at electrolyte oxide interfaces. *Advances in Colloid and Interface Science,* 1996, vol. 69, 31-62
- **KHAN S. U. M. ; KAINTHLA R. C. ; BOCKRIS J. O. M.** The redox potential and the Fermi level in solution. *Journal of Physical Chemistry.,* 1987, vol. 91 (23), 5974-5977